(19) Europäisches Patentamt
European Patent Office
Office européen des brevets

(11) Veröffentlichungsnummer: **0 052 790**
**B1**

(12) # EUROPÄISCHE PATENTSCHRIFT

(45) Veröffentlichungstag der Patentschrift: **16.04.86**

(51) Int. Cl.⁴: **G 01 N 31/16**, G 01 N 21/00

(21) Anmeldenummer: **81109037.2**

(22) Anmeldetag: **27.10.81**

(54) **Verfahren zur Bestimmung der Zusammensetzung binärer Flüssigkeitsgemische.**

(30) Priorität: **21.11.80 DE 3043984**

(43) Veröffentlichungstag der Anmeldung: **02.06.82 Patentblatt 82/22**

(45) Bekanntmachung des Hinweises auf die Patenterteilung: **16.04.86 Patentblatt 86/16**

(84) Benannte Vertragsstaaten: **AT BE CH DE FR GB IT LI NL SE**

(56) Entgegenhaltungen:
**US-A- 3 874 794**
**Z. ANAL. CHEM., Band 270, 1974, Springer-Verlag, Seiten 100-104 Z.B. MAKSIMOVIC et al.: "Determination of empirical parameters of solvent polarity ET in binary mixtures by solvatochromic pyridinium-N-phenol betaine dyes"**
**JUSTUS LIEBIGS ANNALEN DER CHEMIE, Heft 11, 1976, Seiten 1937-1963 C. REICHARDT et al.: "Der Substituenteneinfluss auf das Elektronenanregungsspektrum der Pyridinium-N-phenolat-betaine"**
**JOURNAL OF THE AMERICAN CHEMICAL SOCIETY, Band 80, 1958, Seiten 3253-3270 E.M. KOSOWER: "The effect of solvent on spectra. I. A new empirical measure of solvent polarity: Z-values."**
**Angewandte Chemie 91, 119-131 (1979)**
**Die Akte enthält technische Angaben, die nach dem Eingang der Anmeldung eingereicht wurden und die nicht in dieser Patentschrift enthalten sind.**

(73) Patentinhaber: **Langhals, Heinz, Dr.
Sundgauallee 55
D-7800 Freiburg (DE)**

(72) Erfinder: **Langhals, Heinz, Dr.
Sundgauallee 55
D-7800 Freiburg (DE)**

(74) Vertreter: **Kraus, Walter, Dr. et al
Patentanwälte Kraus, Weisert & Partner Thomas-Wimmer-Ring 15
D-8000 München 22 (DE)**

EP 0 052 790 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Bestimmung der Zusammensetzung binärer Flüssigkeitsgemische, gemäß dem die Konzentration an den einzelnen Komponenten leicht bestimmt werden kann.

In der Zeitschrift für Z. Anal. Chem. 270 (1974), Springer Verlag, Seiten 100-104, wird die Bestimmung empirischer Parameter der Lösungsmittelpolarität $E_T$ in binären Gemischen mittels solvatochromen Pyridinium-N-phenolatbetain-Farbstoffen beschrieben.

Christian Reichardt und Reinhard Müller (Justus Liebigs Annalen der Chemie, Heft 11, 1976, Seiten 1937 bis 1963) beschreiben den Substituenteneinfluß auf das Elektronenanregungsspektrum der Pyridinium-N-phenolatbetaine und erläutern ein Verfahren mit dem $E_T$-Werte bestimmt werden können.

In der US-A-3 874 794 wird ein Verfahren zur quantitativen photometrischen Bestimmung von im wesentlichen farblosen Komponenten durch Umsetzung mit einem farberzeugenden Reagens und anschließend die Bestimmung des gefärbten Reaktionsproduktes bei einer spezifischen Wellenlänge beschrieben.

E.M. Kosower beschreibt in « The Journal of the American Chemical Society » Band 80, 1958, Seiten 3253 bis 3270, den Einfluß von Lösungsmittelspektren.

K. Dimroth und C. Reichardt [Z. Analyt. Chem. *215,* 344 (1966)] berichten über Untersuchungen an binären Lösungsmittelgemischen unter Verwendung solvatochromer Farbstoffe. Diese Autoren haben beobachtet, daß die Lage der längstwelligen Bande im UV-Spektrum solvatochromer Substanzen stark durch das verwendete Lösungsmittel beeinflußt wird. Diese Eigenschaft hat sich besonders gut zur Charakterisierung der Polarität von Lösungsmitteln erwiesen. In unpolaren Lösungsmitteln, wie z. B. Dioxan, absorbieren beispielsweise Pyridinium-N-phenolatbetaine langwellig, in polaren Lösungsmitteln, wie z. B. Methanol, kurzwellig. Das Maximum dieser solvatochromen Absorption wird mit $\lambda_{max}$ bezeichnet. Aus der Absorptionswellenlänge $\lambda_{max}$ kann die molare Anregungsenergie $E_T$ nach der folgenden Gleichung berechnet werden :

$$E_T = 28\,590 \text{ kcal} \cdot \text{nm} \cdot \text{Mol}^{-1}/\lambda_{max}.$$

$$(1 \text{ kcal} = 4{,}186\,8 \text{ kJ})$$

Die Autoren haben für neun Gemische von organischen Lösungsmitteln mit Wasser Eichkurven aufgestellt. Diese Eichkurven gestatten es, den Wassergehalt eines Gemisches unbekannter Zusammensetzung zu bestimmen. Dieses bekannte Verfahren besitzt jedoch den Nachteil, daß erst Eichkurven aufgestellt werden müssen und daß es zeitraubend und langwierig ist.

Die beim obigen Verfahren verwendeten $E_T$-Werte sind allgemein zur Charakterisierung der Polarität organischer Lösungsmittel gut geeignet, und die $E_T$-Skala ist heute die am häufigsten verwendete Polaritätsskala [vgl. K. Dimroth und C. Reichardt « Angewandte Chemie » *91,* 119 (1979) ; K. Dimroth und C. Reichardt « Fortschritte der chemischen Forschung », Band 11/1, Seite 1 (1968)].

Der vorliegenden Anmeldung liegt die Aufgabe zugrunde, einen einfachen, exakten Schnelltest zur Bestimmung der Zusammensetzung binärer Flüssigkeitsgemische zur Verfügung zu stellen.

Gegenstand der Erfindung ist ein Verfahren zur Bestimmung binärer Flüssigkeitsgemische durch Zugabe einer solvatochromen Verbindung zu der zu analysierenden Probe, Bestimmung der der Solvatochromiebande $\lambda_{max}$ im UV-Spektrum und Berechnung des $E_T$-Wertes (molare Anregungsenergie) der solvatochromen Substanz, das dadurch gekennzeichnet ist, daß man gemäß der Gleichung (1)

$$c_p = c^* \exp(E_T/E_D - E_T^o/E_D) - c^* \qquad (1)$$

die Konzentration der polareren Komponente bestimmt, wobei in der Gleichung (1) $c_p$ die Konzentration der polareren Komponente bedeutet und als polarere Komponente mit dem größeren $E_T30$-Wert definiert wird, $E_T$ die molare Anregungsenergie der solvatochromen Verbindung, $E_T^o$ den $E_T$-Wert der reinen, unpolareren Komponente bedeutet, $E_T30$ der $E_T$-Wert ist, der unter Verwendung von Pyridiniumphenolbetain der folgenden Formel (I)

(Siehe Figur Seite 3 f.)

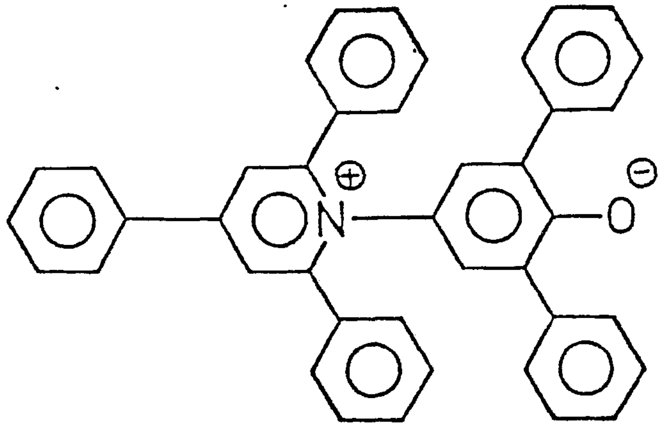

(I)

in dem betreffenden Lösungsmittel bestimmt wurde, c* und $E_D$ empirische Parameter sind, die aus an sich bekannten Tabellen entnommen oder empirisch bestimmt werden können, indem man Gemische der beiden Komponenten mit bekannter Konzentration herstellt, zu den Lösungen eine solvatochrome Verbindung zugibt, vorzugsweise das Pyridiniumphenolatbetain (I) oder den Kosower'schen Farbstoff (II)

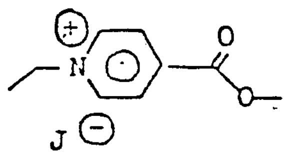

(II)

und die $E_T$-Werte in diesen Lösungen bestimmt, die jeweiligen Gehalte der einzelnen Komponenten in den Lösungen in Konzentrationen umrechnet und in einem Diagramm die erhaltenen $E_T$-Werte gegen ln $c_p$ aufträgt, die Steigung $E_D$ und den Ordinatenabschnitt b des linearen Teils bestimmt und c* nach der Gleichung (3)

$$c^* = \exp[(E_T^\circ - b)/E_D] \qquad (3)$$

berechnet, wobei in der obigen Gleichung c* und $E_D$ die zuvor gegebenen Bedeutungen besitzen, $E_T^\circ$ die molare Anregungsenergie in der reinen unpolareren Komponente bedeutet, b den Ordinatenabschnitt des linearen Teils der erhaltenen Kurven bedeutet und $E_D$ die Steigung des linearen Teils der erhaltenen Kurve bedeutet.

Die $E_T$-Werte lassen sich aus $\lambda_{max}$ der Solvatochromiebande der solvatochromen Substanzen nach der folgenden Gleichung (2)

$$E_T = 28\,590 \text{ kcal} \cdot \text{nm} \cdot \text{Mol}^{-1}/\lambda_{max} \qquad (2)$$

berechnen. Zur Bestimmung der $E_T$-Werte löst man die solvatochrome Substanz in der zu untersuchenden Probe und mißt $\lambda_{max}$ in an sich bekannter Weise. Die Konzentrationen werden vorzugsweise so gewählt, daß die Extinktion bei $\lambda_{max}$ im Extinktionsbereich von 0,4 bis 1,2, vorzugsweise 0,5 bis 1,0 und besonders bevorzugt 0,7 bis 1,0 liegen. Zur Bestimmung der $\lambda_{max}$-Werte kann man jedes geeignete UV-Spektrometer verwenden.

Die Gleichung (1) ist eine Zwei-Parameter-Gleichung, bei der c* und $E_D$ für jedes binäre Lösungsmittelgemisch nach einer einfachen Prozedur bestimmt werden können, indem man Gemische der beiden zu analysierenden Proben mit bekannter Konzentration herstellt, zu den Lösungen eine solvatochrome Verbindung zugibt und die $E_T$-Werte dieser Lösungen bestimmt. Die jeweiligen Gehalte der Lösungen an den beiden Komponenten werden dann in Konzentrationen umgerechnet, und in einem Diagramm werden die erhaltenen $E_T$-Werte gegen ln $c_p$ aufgetragen. Die Steigung $E_D$ und der Ordinatenabschnitt b des linearen Teils werden bestimmt, und c* wird nach der folgenden Gleichung (3)

$$c^* = \exp[(E_T^\circ - b)/E_D] \qquad (3)$$

berechnet.

Die Konzentrationen können in Gew.-% nach der folgenden Gleichung (4) umgerechnet werden:

$$\text{Gew.-\%} = c_p[\text{Mol/l}] \cdot Mg_p/(\rho \text{ Lösung[g/ml]} \cdot 10) \qquad (4)$$

wobei in der Gleichung (4) $Mg_p$ das Molekulargewicht der polareren Komponente und ρ die Dichte der Lösung bedeutet.

Für häufig benutzte Lösungsmittel sind die Werte $E_D$ bzw. c* in der folgenden Tabelle I angegeben. $E_T{}^o$ ist der Wert der reinen unpolareren Komponente.

Bestimmung der Werte von Tabelle I :

Die Bestimmung des $E_T$-Werts wird nach einem einfachen Verfahren vorgenommen. Das Pyridiniumphenolbetain der folgenden Formel (I)

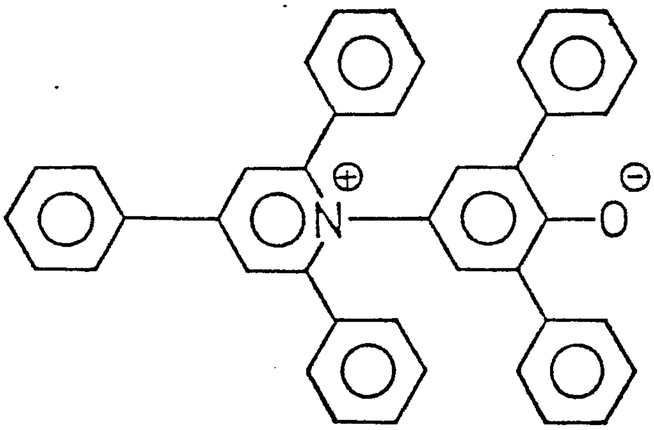

(I)

wird in geringer Menge (< 5 mg) in den zu untersuchenden Lösungsmitteln gelöst. $\lambda_{max}$ von (I) in dieser Lösung wird bestimmt und mit Hilfe der Gleichung (2) wird der $E_T$-Wert berechnet.

Erfindungsgemäß werden als solvatochrome Substanzen das oben erwähnte Pyridiniumphenolatbetain der Formel (I) oder der sog. Kosower'sche Farbstoff der Formel (II)

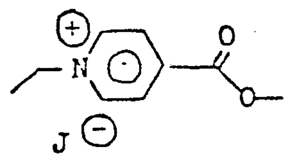

(II)

[E.M. Kosower, J. Am. Chem. Soc. *80*, 3253 (1953)] oder die in der Literaturstelle C. Reichardt, « Solvent Effects in Organic Chemistry », 1. Auflage, Verlag Chemie Weinheim 1979, S. 193 und 194, beschriebenen solvatochromen Substanzen verwendet. Es ist besonders bevorzugt, das Pyridiniumphenolatbetain der Formel (I) zu verwenden.

Als bevorzugte Komponenten für binäre Gemische Können insbesondere die Verbindungen genannt werden, die in Tabelle (2) von C. Reichardt, « Angewandte Chemie » *91*, S. 119 bis 131 (1979) insbesondere auf S. 124, 125 beschrieben werden.

Der Anmelder hat zahlreiche Fälle binärer Flüssigkeitsgemische untersucht und festgestellt, daß alle ohne Ausnahme mit der gefundenen Gleichung beschrieben werden.

In der folgenden Tabelle I sind die Ergebnisse von 38 binären Flüssigkeitsgemischen dargestellt. Es sind die $E_D$- und c*-Werte angegeben. Es sind dabei sehr verschiedene Lösungsmittel in wechselnden Kombinationen eingesetzt worden.

(Siehe Tabelle I Seite 5 ff.)

Tabelle I

Bestimmung von $E_D$ und c* mit dem Pyridiniumphenolat-N-betain der Formel (I) gemäß Gleichung (1) für verschiedene Lösungsmittelgemische

| | Komponenten[a)] | $c_p$ [b,c)] | $E_T^o$ [d,e)] | c* [c,f)] | $E_D$ [d,f)] | $\delta_{E_D}$ [g)] | r [h)] | n [i)] | $c_k$ [c,f)] |
|---|---|---|---|---|---|---|---|---|---|
| 1 | 1-Butanol/Aceton | 0,01-10,9 | 42,2 | 0,14 | 1,99 | 0,013 | 0,99952 | 31 | - |
| 2 | Ethanol/Aceton | 0,02-17,1 | 42,2 | 0,14 | 2,27 | 0,019 | 0,99939 | 28 | - |
| 3 | Methanol/Aceton | 0,03-24,7 | 42,2 | 0,10 | 2,53 | 0,019 | 0,99973 | 29 | - |
| 4 | Wasser/Aceton | 0,06-55,4 | 42,2 | 0,31 | 2,83 | 0,022 | 0,99963 | 29 | 16,5[k)] |
| 5 | N-tert.-Butylformamid/ Aceton | 0,01-9,0 | 46,0 | 0,27 | 1,87 | 0,013 | 0,99948 | 31 | - |
| 6 | Ethanol/Acetonitril | 0,01-17,1 | 46,0 | 0,10 | 1,83 | 0,012 | 0,99972 | 30 | 12,0 |
| 7 | 1-Hexanol/Acetonitril | 0,01-8,0 | 46,0 | 0,08 | 1,08 | 0,019 | 0,99786 | 29 | - |
| 8 | Methanol/Acetonitril | 0,03-24,7 | 46,0 | 0,06 | 1,83 | 0,033 | 0,99877 | 31 | - |
| 9 | Wasser/Acetonitril | 0,06-49,8 | 46,0 | 0,15 | 2,07 | 0,024 | 0,99877 | 27 | - |
| 10 | N-tert.-Butylform-amid/Benzol | 0,01-9,0 | 34,5 | 0,01 | 2,27 | 0,031 | 0,99851 | 31 | - |
| 11 | Wasser/tert.-Butyl-alkohol | 0,06-33,2 | 43,9 | 1,01 | 2,82 | 0,050 | 0,99666 | 26 | - |
| 12 | Wasser/tert.-Butyl-hydroperoxid | 0,4-7,4 | 49,7 | 0,312 | 1,40 | 0,021 | 0,99922 | 12 | - |
| 13 | Wasser/Dimethylform-amid | 0,06-38,8 | 43,8 | 11,43 | 9,24 | 0,18 | 0,99527 | 27 | - |

Tabelle I (Fortsetzung)

| | | | | | | | | | |
|---|---|---|---|---|---|---|---|---|---|
| 14 | Acetonitril/1,4-Dioxan | 0,02-19,1 | 36,0 | 0,77 | 3,23 | 0,031 | 0,99909 | 29 | - |
| 15 | 1-Butanol/1,4-Dioxan | 0,01-10,1 | 36,0 | 0,90 | 5,39 | 0,026 | 0,99973 | 30 | - |
| 16 | Ethanol/1,4-Dioxan | 0,02-17,1 | 36,0 | 0,72 | 4,99 | 0,030 | 0,99975 | 30 | - |
| 17 | Methanol/1,4-Dioxan | 0,03-24,7 | 36,o | 0,35 | 4,55 | 0,037 | 0,99922 | 30 | - |
| 18 | Nitromethan/1,4-Dioxan | 0,02-18,6 | 36,0 | 1,01 | 3,49 | 0,026 | 0,99929 | 31 | - |
| 19 | Pinakolon/1,4-Dioxan | 0,2-8,0 | 36,0 | 3,43 | 3,33 | 0,16 | 0,98025 | 19 | - |
| 20 | Propionitril/1,4-Dioxan | 0,01-14,1 | 36,0 | 1,41 | 3,33 | 0,038 | 0,99834 | 30 | - |
| 21 | Wasser/1,4-Dioxan | 0,6-55,4 | 36,0 | 0,58 | 4,34 | 0,054 | 0,99922 | 22 | 22,0 1) |
| 22 | 1-Butanol/Nitromethan | 0,01-10,9 | 46,3 | 0,06 | 1,43 | 0,015 | 0,99914 | 31 | 6,5 |
| 23 | Ethanol/Nitromethan | 0,02-17,1 | 46,3 | 0,03 | 1,41 | 0,030 | 0,99704 | 30 | 8,5 |
| 24 | Methanol/Nitromethan | 0,03-22,2 | 46,3 | 0,01 | 1,66 | 0,018 | 0,99947 | 29 | 10,0 |
| 25 | Aceton/Pyridin | 0,03-12,2 | 40,2 | 32,06 | 4,01 | 0,13 | 0,98710 | 28 | - |
| 26 | 1-Dodecanol/Pyridin | 0,004-4,5 | 40,2 | 0,89 | 2,90 | 0,03 | 0,99901 | 30 | 3,0 |
| 27 | thanol/Pyridin | 0,02-17,1 | 40,2 | 12,75 | 9,64 | 0,17 | 0,99554 | 31 | - |
| 28 | 1-Hexanol/Pyridin | 0,01-8,0 | 40,2 | 1,11 | 2,90 | 0,047 | 0,99763 | 30 | - |
| 29 | Methanol/Pyridin | 0,03-24,7 | 40,2 | 5,84 | 6,92 | 0,081 | 0,99802 | 31 | - |
| 30 | Nitromethan/Pyridin | 0,02-18,6 | 40,2 | 13,62 | 6,46 | 0,14 | 0,99384 | 30 | - |
| 31 | tert.-Pentylalkohol/Pyridin | 0,005-8,3 | 40,2 | 0,95 | 1,02 | 0,025 | 0,99341 | 29 | - |

Tabelle I (Fortsetzung)

| | | | | | | | | | |
|---|---|---|---|---|---|---|---|---|---|
| 32 | Wasser/Pyridin | 0,06-49,8 | 40,2 | 5,48 | 7,09 | 0,12 | 0,99599 | 29 | - |
| 33 | 1-Butanol/$CS_2$ | 0,01-10,9 | 32,6 | 0,03 | 2,42 | 0,028 | 0,99906 | 36 | 7,5 |
| 34 | 1,4-Dioxan/$CS_2$ | 0,01-11,7 | 32,6 | 1,96 | 1,21 | 0,049 | 0,98083 | 31 | 8,0 |
| 35 | 1-Octanol/$CS_2$ | 0,01-6,4 | 32,6 | 0,06 | 2,83 | 0,055 | 0,99676 | 30 | 4,0 |
| 36 | Pinakolon/$CS_2$ | 0,3-8,0 | 32,6 | 7,89 | 9,30 | 0,26 | 0,99459 | 16 | - |
| 37 | Methanol/Aceton m) | 0,03-24,7 | 66,3 m) | 0,65 | 4,66 | 0,014 | 0,99993 | 31 | - |
| 38 | Methanol/1,4-Dioxan m) | 0,03-24,7 | 63,0 m) | 2,66 | 8,52 | 0,18 | 0,99384 | 31 | - |

a) das polarere Lösungsmittel wird zuerst genannt.
b) Untersuchter Konzentrationsbereich
c) in $Mol.l^{-1}$
d) in $kcal.Mol^{-1}$
e) $E_T$30-Wert der unpolareren Komponente (s. auch Lit.)
f) siehe Text
g) Varianz von $E_D$
h) Korrelationskoeffizient bei Anwendung von Gl. (3)
i) Anzahl der Meßpunkte
k) für $c_p > c_k$ gilt $E_D = 6,8$ und $c^* = 6,1$
l) für $c_p > c_K$ gilt $E_D = 20,0$ und $c^* = 19,1$
m) unter Verwendung des Kosower'schen Farbstoffs.

Das neue Analysenverfahren kann mit allen Arten binärer Systeme durchgeführt werden. Als zu analysierende Proben kann man Gemische aus aliphatischen, cycloaliphatischen und aromatischen Kohlenwasserstoffen, Alkoholen, Ketonen, Nitrilen, Aldehyden, Schwefelverbindungen wie z. B. Sulfoxide, Sulfone und Mercaptane aus Estern, wie z. B. Carbonsäureester, Lactone und Sulfonsäureester, Ethern, Acetalen und Ketalen, Oximen Heterocyclen, Stickstoffverbindungen wie z. B. Amine, Amide, Hydrazine und Lactame, Phosphorverbindungen wie z. B. Phosphine, Phosphinoxide, Phosphorigsäureester und Phosphorsäureester und ihren substituierten Derivaten verwenden. Hinsichtlich der Art und Weise der zu analysierenden binären Gemische gibt es praktisch keine Beschränkungen.

Das neue Analysenverfahren kann z. B. bei Untersuchungen der Zusammensetzung von Monomerengemischen bei Copolymerisationen, Untersuchung der Zusammensetzung von Lösungsmittelgemischen bei der Farben-, Lack- und Arzneimittelherstellung sowie allgemein bei der Untersuchung von Gemischen bei der chemischen Synthese bzw. Aufarbeitung von Extraktions- und Flotationsmitteln verwendet werden. Es kann, da es sehr spezifisch ist, als Verfahren zur Prüfung der Reinheit verwendet werden.

Die einzige Einschränkung besteht bei Verwendung von binären Gemischen mit Komponenten sehr ähnlicher Polarität. Die Änderung des Meßwertes ($\lambda_{max}$ bzw. $E_T$) bei Veränderung der Lösungsmittelzusammensetzung wird dann so klein, daß eine genaue Gehaltsbestimmung nicht mehr möglich ist.

Bemerkenswert ist ferner, daß nicht beide Komponenten des binären Gemisches flüssig zu sein brauchen. Die gefundene Gleichung gilt sogar für den flüssigen Bereich einer Mischung eines Feststoffs mit einer Flüssigkeit bzw. zweier Feststoffe.

Mit dem erfindungsgemäßen Verfahren läßt sich somit die Zusammensetzung zahlreicher zu analysierender Proben feststellen. Beispielsweise kann mit dem erfindungsgemäßen Verfahren der Lösungsmittelgehalt von flüssigen, gasförmigen und festen Proben bestimmt werden. Bei flüssigen Proben wird der Lösungsmittelgehalt direkt nach Gleichung (1) unter Verwendung eines solvatochromen Farbstoffs bestimmt.

Gasförmige Proben können ebenfalls analysiert werden. Um z. B. den Lösungsmittelgehalt (LM 1) eines Gases zu bestimmen, wird ein definiertes Volumen des Gases durch ein zweites, hochsiedendes Lösungsmittel (LM 2) geschickt, das das erste Lösungsmittel auswäscht. Über eine Gehaltsbestimmung von LM 1 in LM 2 mit Hilfe von (1) kann der Lösungsmittelgehalt des Gases bestimmt werden.

Ebenso können feste Proben untersucht werden, z. B. kann der Wassergehalt oder der Gehalt an einem bestimmten Lösungsmittel in polymeren Naturstoffen, wie z. B. Stärke, Cellulose in synthetischen Polymeren, in pharmazeutischen Präparaten und solvensbindenden Substanzen, wie z. B. Salzen usw. bestimmt werden.

Werden nach dem erfindungsgemäßen Verfahren Dispersionen oder Suspensionen analysiert, so muß man beachten, daß ein Teil des durchgestrahlten Lichtes gestreut wird. Dieses Phänomen ändert zwar nichts an der Lage von $\lambda_{max}$, es kann jedoch die Messung erschweren. Zur Bestimmung von $\lambda_{max}$ muß man in einem solchen Fall eventuell ein empfindliches Spektrometer verwenden.

Das erfindungsgemäße Verfahren läßt sich bei Zimmertemperatur durchführen. Zur Bestimmung der Werte für die Tabelle und, sofern sehr genaue Analysenergebnisse erforderlich sind, ist es bevorzugt, das erfindungsgemäße Verfahren bei konstanter Temperatur durchzuführen. Dies ist jedoch nicht unbedingt erforderlich, da der Temperatureinfluß bei dem erfindungsgemäßen Verfahren innerhalb enger Grenzen liegt.

Das Verfahren kann bei beliebigen Temperaturen durchgeführt werden, bei denen der verwendete Farbstoff thermostabil ist. Bei sehr hohen Temperaturen oberhalb des Siedepunkts der Mischung wird das Verfahren kompliziert.

Bei einer besonders bevorzugten, vereinfachten erfindungsgemäßen Ausführungsform erfolgt die Analyse nach der Gleichung (1) über einen visuellen Farbvergleich mit einer Farbskala. Dabei wird die Absorptionsfarbe der Lösung oder Dispersion visuell mit einer Farbskala (Absorptionsfarbe als Funktion von $\lambda_{max}$ der Absorption) verglichen und über diesen Vergleich $\lambda_{max}$ der Absorption bestimmt.

Das erfindungsgemäße Verfahren kann auch auf solche Weise durchgeführt werden, daß die solvatochromen Farbstoffe auf Feststoffe aufgezogen werden, z. B. auf Papier, so daß man Tetstreifen erhält. Diese Teststreifen werden in die zu untersuchende Lösung getaucht. Je nach Gehalt der einzelnen Komponenten verfärbt sich der Teststreifen. Durch einen Farbvergleich mit einer Farbskala ($\lambda$ als Funktion der Absorptionsfarbe) wird $\lambda_{max}$ bestimmt und mit Hilfe von Formel (1) $c_p$ berechnet.

Für das Ergebnis ist besonders von Bedeutung, daß ein logarithmischer Zusammenhang zwischen den $E_T$-Werten und $c_p$ nach Gleichung (1) besteht. Die relative Genauigkeit der Bestimmung von $c_p$ ist damit über einen weiten Konzentrationsbereich konstant. $c_p$ kann auch im Bereich geringer Konzentrationen an polarer Komponente mit großer Genauigkeit bestimmt werden.

Die folgenden Beispiele erläutern die Erfindung.

In allen folgenden Beispielen werden die UV-Spektren mit dem UV-Spektrophotometer DMR 21 der Firma Zeiss aufgenommen. Für eine überschlägige Konzentrationsbestimmung reicht ein visueller Vergleich der Lösung mit einer Farbskala.

## Beispiel 1

Allgemeines Beispiel für die Bestimmung der Zusammensetzung binärer Flüssigkeitsgemische

In einen 10 ml Meßkolben werden 0,1, 1, 2... ml der polareren Komponente des binären Gemisches eingefüllt. Der Meßkolben wird mit der anderen Komponente auf 10 ml aufgefüllt. Das Lösungsmittelgemisch wird mit einer geringen Menge (< 5 mg) des Phenolbetains der Formel (I) versetzt und die Lage der Solvatochromiebande $\lambda_{max}$ wird im UV-Spektrum bei 25 °C bestimmt. Die Konzentrationen sollen so gewählt werden, daß $\lambda_{max}$ im Extinktionsbereich von 0,7... 1,0 liegt. Für eine genaue Lokalisierung von $\lambda_{max}$ kann der Schnittpunkt der Verbindungslinie der Halbmesser mit der Absorptionskurve entsprechend der Mathias'schen Regel (vgl. R. Brdička, Grundlagen der Physikalischen Chemie, Deutscher Verlag der Wissenschaften, Berlin 1972, 11. Aufl. S. 252, 503), die ein Verfahren angibt, um das Maximum auch von sehr flach verlaufenden Kurven mit einfachen Mitteln hoher Präzision zu bestimmen, bestimmt werden.

$\lambda_{max}$ wird nach Formel (2) in den $E_T$-Wert umgerechnet und dieser Wert anschließend mit den Werten $E_T°$, c* und $E_D$ von Tabelle I in die Formel (1) eingesetzt und $C_{H2O}$ berechnet.

In einem Diagramm wird $E_T$ gegen ln $c_p$ aufgetragen und die Steigung $E_D$ und der Ordinatenabschnitt b des linearen Teils werden bestimmt. c* wird nach Gleichung (3) wie in der Beschreibung angegeben, berechnet.

Für diese Prozedur steht das Rechenprogramm POLAR zur Verfügung, das auch die Meßwerte im nichtlinearen Teil des Diagramms berücksichtigt. Es dient zur Berechnung von $E_D$ und c* auf einem iterativen Weg. Da die gefundene Polaritätsgleichung transzendent irrationalen Charakter hat, ist eine direkte Bestimmung der Werte $E_D$ und c* aus allen Meßwerten nicht möglich (beim Auftragen von $E_T(30)$ gegen ln $c_p$ wird nur ein begrenzter linearer Abschnitt erhalten). Zur Ausnutzung aller Meßpunkte erfolgt die Angleichung der Parameter an die Meßwerte durch Iteration nach an und für sich bekannten mathematischen Verfahren. Die Größe Sigma $E_D$ ist der statistische Fehler in $E_D$, der nach üblichen Methoden bestimmt worden ist.

Beispiel 2

Spezielles Beispiel für die Bestimmung der Parameter $E_D$ und c* von dem System « Methanol-Aceton »

Gemäß dem in Beispiel 1 beschriebenen Verfahren werden in einen 10 ml Meßkolben die in der folgenden Tabelle II aufgeführten Milliliter Methanol einpipettiert. Dann wird mit Aceton auf 10 ml aufgefüllt. Das Phenolbetain der Formel (I) wird in geringer Menge (< 5 mg) in den erhaltenen Lösungen aufgelöst und dann wird $\lambda_{max}$ gemessen. Die eingesetzten Milliliter werden in die Konzentration in $Mol \cdot l^{-1}$ $c_p$ Methanol umgerechnet und die $\lambda_{max}$-Werte werden in $E_T30$ umgerechnet. Danach wird ln $c_p$ berechnet. Die erhaltenen Ergebnisse sind in Tabelle II aufgeführt.

(Siehe Tabelle II Seite 10 ff.)

Tabelle II

| ml Methanol | $\lambda_{max}$ | $c_p$ (Mol/l) | $E_T30$ | ln $c_p$ |
|---|---|---|---|---|
| 0,00 | 677,0 | 0,000 | 42,2 | -11,51 |
| 0,01 | 666,0 | 0,025 | 42,9 | -3,70 |
| 0,02 | 662,0 | 0,049 | 43,2 | -3,01 |
| 0,03 | 657,0 | 0,074 | 43,5 | -2,60 |
| 0,04 | 650,0 | 0,099 | 44,0 | -2,31 |
| 0,05 | 648,0 | 0,123 | 44,1 | -2,09 |
| 0,06 | 643,0 | 0,148 | 44,5 | -1,91 |
| 0,07 | 641,0 | 0,173 | 44,6 | -1,76 |
| 0,08 | 638,0 | 0,198 | 44,8 | -1,62 |
| 0,09 | 636,0 | 0,222 | 45,0 | -1,50 |
| 0,10 | 628,0 | 0,247 | 45,5 | -1,40 |
| 0,20 | 610,0 | 0,494 | 46,9 | -0,71 |
| 0,30 | 598,0 | 0,741 | 47,8 | -0,30 |
| 0,40 | 590,0 | 0,988 | 48,5 | -0,01 |
| 0,51 | 586,0 | 1,260 | 48,8 | 0,23 |
| 0,61 | 580,0 | 1,507 | 49,3 | 0,41 |
| 0,71 | 573,0 | 1,754 | 49,9 | 0,56 |
| 0,80 | 567,0 | 1,976 | 50,4 | 0,68 |
| 0,90 | 563,0 | 2,223 | 50,8 | 0,80 |
| 1,00 | 562,0 | 2,470 | 50,9 | 0,90 |

Tabelle II (Fortsetzung)

| ml Methanol | $\lambda_{max}$ | $c_p$ (Mol/l) | $E_T30$ | ln $c_p$ |
|---|---|---|---|---|
| 2,00 | 543,0 | 4,940 | 52,7 | 1,60 |
| 3,00 | 533,0 | 7,410 | 53,6 | 2,00 |
| 4,00 | 530,0 | 9,880 | 53,9 | 2,29 |
| 5,00 | 523,0 | 12,350 | 54,7 | 2,51 |
| 6,00 | 522,0 | 14,820 | 54,8 | 2,70 |
| 7,00 | 519,0 | 17,290 | 55,1 | 2,85 |
| 8,00 | 516,0 | 19,760 | 55,4 | 2,98 |
| 9,00 | 512,0 | 22,230 | 55,8 | 3,10 |
| 10,00 | 511,0 | 24,700 | 55,9 | 3,21 |

Die Messungen erfolgten bei einer Temperatur von 298,00 K und die Startbedingungen waren wie folgt:
Faktor Konzentration : 2,470
Faktor Energie : 28590
c* : 0,1
Anzahl der Meßwerte : 29

In Figur 1 wird $E_T30$ gegen ln $c_p$ aufgetragen und durch den linearen Teil der Kurve eine Gerade gelegt. Die Steigung der Geraden beträgt 2,53.

$E_D$ dieses Gemisches, der Ordinatenabschnitt, 48,1, dieser Geraden ist b.

Der $E_T°$-Wert ist nach C. Reichardt, « Angewandte Chemie » *91*, 119 (1979) 42,2 kcal · $Mol^{-1}$.

Nach Formel (3) wird c* berechnet :

$$c^* = \exp[(E_T^\circ - b)/E_D] \qquad c^* = 0{,}097\ Mol \cdot l^{-1}$$

Mit dem Rechenprogramm POLAR wurde der genauere Wert für c* berechnet :

$$c^* = 0{,}099\ Mol \cdot l^{-1}$$

Mit Hilfe der berechneten Werte c* und $E_D$ für das Gemisch Methanol-Aceton können nun beliebige Gemische analysiert werden.

In der Tabelle III sind die erhaltenen Ergebnisse aufgeführt.

In Figur 2 sind die Ergebnisse der maschinellen Auswertung des Systems Methanol-Aceton dargestellt.

(Siehe Tabelle III Seite 13 ff.)

Tabelle III

| c(Mol/l) | $E_T30$ | ln ($c^+$ $c^*$) | ln ($c/c^*$ + 1) |
|---|---|---|---|
| 0,000 | 42,2 | -2,31 | 0,00 |
| 0,025 | 42,9 | -2,09 | 0,22 |
| 0,049 | 43,2 | -1,91 | 0,40 |
| 0.074 | 43,5 | -1,75 | 0,56 |
| 0,099 | 44,0 | -1,62 | 0,69 |
| 0,123 | 44,1 | -1,50 | 0,81 |
| 0,148 | 44,5 | -1,40 | 0,92 |
| 0,173 | 44,6 | -1,30 | 1,01 |
| 0,198 | 44,8 | -1,22 | 1,10 |
| 0,222 | 45,0 | -1,14 | 1,18 |
| 0,247 | 45,5 | -1,06 | 1,25 |
| 0,494 | 46,9 | -0,52 | 1,79 |
| 0,741 | 47,8 | -0,17 | 2,14 |
| 0,988 | 48,5 | 0,08 | 2,40 |
| 1,260 | 48,8 | 0,31 | 2,62 |
| 1,507 | 49,3 | 0,47 | 2,79 |
| 1,754 | 49,9 | 0,62 | 2,93 |
| 1,976 | 50,4 | 0,73 | 3,04 |
| 2,223 | 50,8 | 0,84 | 3,16 |
| 2,470 | 50,9 | 0,94 | 3,26 |
| 4,940 | 52,7 | 1,62 | 3,93 |

Tabelle III (Fortsetzung)

| c (Mol/l) | $E_T30$ | ln ($c^+$ $c^*$) | ln ($c/c^+$ + 1) |
|---|---|---|---|
| 7,410 | 53,6 | 2,02 | 4,33 |
| 9,880 | 53,9 | 2,30 | 4,61 |
| 12,350 | 54,7 | 2,52 | 4,83 |
| 14,820 | 54,8 | 2,70 | 5,02 |
| 17,290 | 55,1 | 2,86 | 5,17 |
| 19,760 | 55,4 | 2,99 | 5,30 |
| 22,230 | 55,8 | 3,11 | 5,42 |
| 24,700 | 55,9 | 3,21 | 5,52 |

Korrelationskoeffizient : 0,999 73
Sigma $E_D$ : 0,018 693

Beispiel 3

Beispiel für die Bestimmung des Gehaltes von Methanol in einem Gemisch aus Methanol-Aceton unbekannter Konzentration

Das Phenolbetain der Formel (I) wird in einem Gemisch Methanol-Aceton gelöst und $\lambda_{max}$ wird bestimmt. $\lambda_{max}$ beträgt 610 nm.

$$\Longrightarrow E_T30 = 46{,}9 \text{ kcal} \cdot \text{Mol}^{-1}$$

Mit Hilfe von Gleichung (1) wird berechnet :

$$c_p = c^* \exp(E_T/E_D - E_T^o/E_D) - c^*$$

$$c_p = 0{,}535 \text{ Mol} \cdot l^{-1}$$

$$E_D = 2{,}53 \text{ kcal} \cdot \text{Mol}^{-1}$$

$$c^* = 0{,}099 \text{ Mol} \cdot l^{-1}$$

$$E_T^o = 42{,}2 \text{ kcal} \cdot \text{Mol}^{-1}$$

Das zu untersuchende Gemisch enthielt also 0,54 Mol · $l^{-1}$ Methanol ; der eingestellte Wert $c_p$ war 0,494. Der Rest war Aceton.

Mit einem besseren Spektrometer kann die Genauigkeit der Bestimmung von $c_p$ noch gesteigert werden.

Beispiel 4

Gemäß dem in Beispiel 2 beschriebenen Verfahren wird ein Gemisch aus Ethanol und Aceton untersucht.

Die Bestimmung von $E_D$, b und c* erfolgt wie oben beschrieben.

Ethanol ist die polarere Komponente

$$E_D = 2{,}27 \text{ kcal} \cdot \text{Mol}^{-1}$$

$$c^* = 0{,}137 \text{ Mol} \cdot l^{-1}$$

$$b = 46{,}8 \text{ kcal} \cdot \text{Mol}^{-1}$$

$$E_T^o = 42{,}2 \text{ kcal} \cdot \text{Mol}^{-1}$$

($E_T30$-Wert von Aceton nach C. Reichardt, « Angewandte Chemie » *91*, 119, (1979)).

Die erhaltenen Ergebnisse sind in Tabellen IV und V und in Figur 3 (Handauswertung) und in Figur 4 (maschinelle Auswertung) dargestellt.

(Siehe Tabelle IV Seite 16 ff.)

Tabelle IV

| ml Ethanol | $\lambda_{max}$ (nm) | $c_p$(Mol/l) | $E_T30$ | ln $c_p$ |
|---|---|---|---|---|
| 0,00 | 677,5 | 0,000 | 42,2 | $-\infty$ |
| 0,01 | 670,0 | 0,017 | 42,7 | -4,07 |
| 0,02 | 668,0 | 0,034 | 42,8 | -3,37 |
| 0,03 | 664,0 | 0,051 | 43,1 | -2,97 |
| 0,04 | 662,0 | 0,069 | 43,2 | -2,68 |
| 0,05 | 660,0 | 0,086 | 43,3 | -2,46 |
| 0,06 | 658,0 | 0,103 | 43,4 | -2,27 |
| 0,07 | 656,0 | 0,120 | 43,6 | -2,12 |
| 0,08 | 656,0 | 0,137 | 43,6 | -1,99 |
| 0,09 | 654,0 | 0,154 | 43,7 | -1,87 |
| 0,10 | 650,0 | 0,171 | 44,0 | -1,76 |
| 0,20 | 624,0 | 0,343 | 45,8 | -1,07 |
| 0,30 | 625,0 | 0,514 | 45,7 | -0,67 |
| 0,40 | 620,0 | 0,685 | 46,1 | -0,38 |
| 0,50 | 613,0 | 0,857 | 46,6 | -0,15 |
| 0,60 | 607,0 | 1,028 | 47,1 | 0,03 |
| 0,70 | 600,0 | 1,199 | 47,6 | 0,18 |
| 0,90 | 597,0 | 1,542 | 47,9 | 0,43 |
| 1,00 | 592,0 | 1,713 | 48,3 | 0,54 |
| 2,00 | 572,0 | 3,427 | 50,0 | 1,23 |

Tabelle IV (Fortsetzung)

| ml | $\lambda_{max}$ (nm) | $c_p$(Mol/l) | $E_T30$ | ln $c_p$ |
|---|---|---|---|---|
| 3,00 | 562,0 | 5,140 | 50,9 | 1,64 |
| 4,00 | 556,0 | 6,853 | 51,4 | 1,92 |
| 5,00 | 551,0 | 8,566 | 51,9 | 2,15 |
| 6,00 | 551,0 | 10,280 | 51,9 | 2,33 |
| 7,00 | 548,0 | 11,993 | 52,2 | 2,48 |
| 8,00 | 541,0 | 13,706 | 52,8 | 2,62 |
| 9,00 | 542,0 | 15,420 | 52,7 | 2,74 |
| 10,00 | 540,0 | 17,133 | 52,9 | 2,84 |

Startbedingungen :
Faktor Konzentration : 1,713
Faktor Energie : 28590
c* : 0,1
Anzahl der Meßwerte : 28

Tabelle V

| $c_p$ (Mol/l) | $E_T30$ | ln (c+ $c^*$ ) | ln ($c/c^*$+ 1) |
|---|---|---|---|
| 0,000 | 42,2 | -1,99 | 0,00 |
| 0,017 | 42,7 | -1,87 | 0,12 |
| 0,034 | 42,8 | -1,77 | 0,22 |
| 0,051 | 43,1 | -1,67 | 0,32 |
| 0,069 | 43,2 | -1,58 | 0,41 |
| 0,086 | 43,3 | -1,50 | 0,49 |
| 0,103 | 43,4 | -1,43 | 0,56 |
| 0,120 | 43,6 | -1,36 | 0,63 |
| 0,137 | 43,6 | -1,29 | 0,69 |
| 0,154 | 43,7 | -1,23 | 0,75 |
| 0,171 | 44,0 | -1,18 | 0,81 |
| 0,343 | 45,8 | -0,73 | 1,25 |
| 0,514 | 45,7 | -0,43 | 1,56 |
| 0,685 | 46,1 | -0,20 | 1,79 |
| 0,857 | 46,6 | -0,01 | 1,98 |
| 1,028 | 47,1 | 0,15 | 2,14 |
| 1,199 | 47,6 | 0,29 | 2,28 |
| 1,542 | 47,9 | 0,52 | 2,51 |
| 1,713 | 48,3 | 0,62 | 2,60 |
| 3,427 | 50,0 | 1,27 | 3,26 |

Tabelle V (Fortsetzung)

| $c_p$ (Mol/l) | $E_T30$ | ln $(c + c^*)$ | ln $(c/c^* + 1)$ |
|---|---|---|---|
| 5,140 | 50,9 | 1,66 | 3,65 |
| 6,853 | 51,4 | 1,94 | 3,93 |
| 8,566 | 51,9 | 2,16 | 4,15 |
| 10,280 | 51,9 | 2,34 | 4,33 |
| 11,993 | 52,2 | 2,50 | 4,48 |
| 13,706 | 52,8 | 2,63 | 4,62 |
| 15,420 | 52,7 | 2,74 | 4,73 |
| 17,133 | 52,9 | 2,85 | 4,84 |

Korrelationskoeffizient : 0,999 39
Sigma $E_D$ : 0,019

Beispiel 5

Untersuchung eines Gemisches Ethanol-Aceton unbekannter Konzentration

Gemäß dem in Beispiel 3 beschriebenen Verfahren wird das Gemisch Ethanol-Aceton unbekannter Konzentration untersucht.

$$\lambda_{max} = 650 \text{ nm} \Rightarrow E_T30 = 44{,}0 \Rightarrow$$

$$c_p = 0{,}166 \text{ Mol} \cdot l^{-1};$$

$$\text{eingestellt waren } 0{,}171 \text{ Mol} \cdot l^{-1}$$

Das zu untersuchende Gemische enthält 0,166 Mol · $l^{-1}$ Ethanol. Der Rest ist Aceton.

**Patentansprüche**

1. Verfahren zur Bestimmung der Zusammensetzung binärer Flüssigkeitsgemische durch Zugabe einer solvatochromen Verbindung zu der zu analysierenden Probe, Bestimmung der Solvatochromiebande $\lambda_{max}$ im UV-Spektrum und Berechnung des $E_T$-Wertes (molare Anregungsenergie) der solvatochromen Substanz, dadurch gekennzeichnet, daß man gemäß der Gleichung (1)

$$c_p = c^*\exp(E_T/E_D - E_T^o/E_D) - c^* \quad (1)$$

die Konzentration der polareren Komponente bestimmt, wobei in der Gleichung (1) $c_p$ die Konzentration der polareren Komponente bedeutet und als polarere Komponente die Komponente mit dem größeren $E_T$30-Wert definiert wird, $E_T$ die molare Anregungsenergie der solvatochromen Verbindung, $E_T^o$ der $E_T$-Wert der reinen, unpolareren Komponente bedeutet, $E_T$30 der $E_T$-Wert ist, der unter Verwendung des Pyridiniumphenolatbetains der folgenden Formel (I)

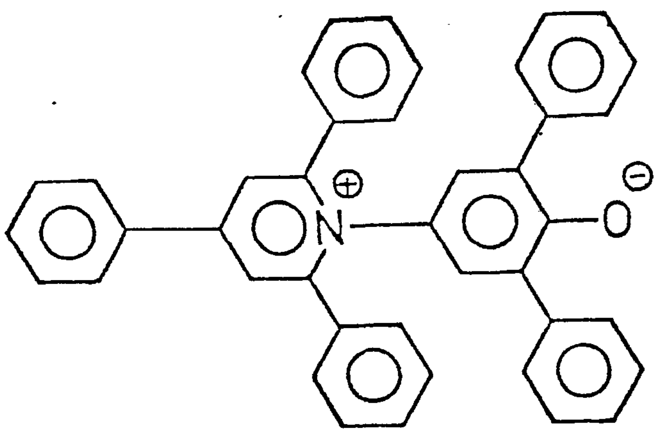

(I)

in dem betreffenden Lösungsmittel bestimmt wurde, c* und $E_D$ empirische Parameter sind, die aus an sich bekannten Tabellen entnommen oder empirisch bestimmt werden können, indem man Gemische der beiden Komponenten mit bekannter Konzentration herstellt, zu den Lösungen eine solvatochrome Verbindung zugibt, vorzugsweise das Pyridiniumphenolatbetain (I) oder den Kosower'schen Farbstoff (II)

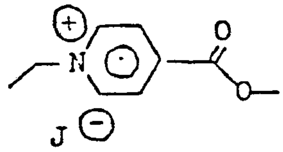

(II)

und die $E_T$-Werte in diesen Lösungen bestimmt, die jeweiligen Gehalte der einzelnen Komponenten in den Lösungen in Konzentrationen umrechnet und in einem Diagramm die erhaltenen $E_T$-Werte gegen ln $c_p$ aufträgt, die Steigung $E_D$ und den Ordinatenabschnitt b des linearen Teils bestimmt und c* nach der Gleichung (3)

$$c^* = \exp[(E_T^o - b)/E_D] \quad (3)$$

berechnet, wobei in der obigen Gleichung c* und $E_D$ die zuvor gegebenen Bedeutungen besitzen, $E_T°$ die molare Anregungsenergie in der reinen unpolareren Komponente bedeutet, b den Ordinatenabschnitt des linearen Teils der erhaltenen Kurven bedeutet und $E_D$ die Steigung des linearen Teils der erhaltenen Kurve bedeutet.

2. Verfahren nach Anspruch 1, dadurch gekennzeichnet, daß der $E_T$-Wert der solvatochromen Verbindung nach der Gleichung (2)

$$E_T = 28\,590 \text{ kcal} \cdot \text{nm} \cdot \text{Mol}^{-1}/\lambda_{max} \quad (2)$$

$$(1 \text{ kcal} = 4{,}186\,8 \text{ kJ})$$

wobei $E_T$ die zuvor gegebene Bedeutung besitzt, berechnet wird.

3. Verfahren nach einem der Ansprüche 1 oder 2, dadurch gekennzeichnet, daß die Konzentrationen so gewählt werden, daß $\lambda_{max}$ im Extinktionsbereich von 0,6 bis 1,0 liegt.

4. Verfahren nach einem der Ansprüche 1 bis 3, dadurch gekennzeichnet, daß die Messungen bei konstanter Temperatur durchgeführt werden.

**Claims**

1. A process for determining the composition of binary liquid mixtures by addition of a solvatochromic compound to the sample to be analyzed, determination of the solvatochromism band $\lambda_{max}$ in the UV-spectrum and calculation of the $E_T$-value (molar excitation energy) of the solvatochromic substance, characterized in that the concentration of the more polar component is determined in accordance with the following equation :

$$c_p = c^* \exp(E_T/E_D - E_T°/E_D) - c^* \quad (1)$$

where $c_p$ is the concentration of the more polar component, the more polar component being defined as the component having the greater $E_T30$-value, $E_T$ is the molar excitation energy of the solvatochromic compound, $E_T°$ is the $E_T$-value of the pure, more apolar component, $E_T30$ is the $E_T$-value which was determined using the pyridinium phenol betaine corresponding to the following formula

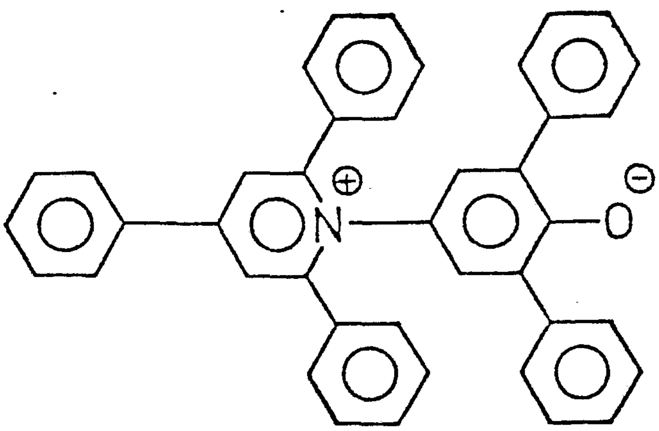

(I)

in the particular solvent, c* and $E_D$ are empirical parameters which may be taken from Tables known *per se* or may be empirically determined by preparing mixtures of the two components of know concentration, adding a solvatochromic compound, preferably the pyridinium phenol betaine (I) or Kosover's dye (II)

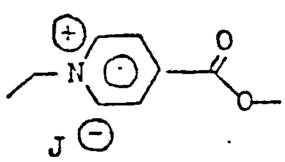

(II)

and determining the $E_T$-values in these solutions, converting the respective contents of the individual components in the solutions into concentrations and plotting the $E_T$-values obtained against ln $c_p$ in a graph, determining the gradient $E_d$ and the ordinate section b of the linear portion and calculating c* in accordance with the following equation :

$$c^* = \exp[(E_T° - b)/E_D] \quad (3)$$

where c* and $E_D$ are as defined above, $E_T°$ is the molar excitation energy in the pure more apolar component, b is the ordinate section of the linear portion of the curves obtained and $E_D$ is the gradient of the linear portion of the curve obtained.

2. A process as claimed in Claim 1, characterized in that the $E_T$-value of the solvatochromic compound is calculated in accordance with the following equation

$$E_T = 28\,590\ \text{kcal} \cdot \text{nm} \cdot \text{mol}^{-1}/\lambda_{max} \qquad (2)$$

$$(1\ \text{kcal} = 4.186\,8\ \text{kl})$$

where $E_T$ is as defined above.

3. A process as claimed in Claim 1 or 2, characterized in that the concentrations are so selected that $\lambda_{max}$ is in the extinction range of 0.6 to 1.0.

4. A process as claimed in any of Claims 1 to 3, characterized in that the measurements are carried out at constant temperature.

**Revendications**

1. Procédé pour la détermination de la composition de mélanges binaires liquides par addition d'un composé solvatochrome à l'échantillon à analyser, détermination de la bande de solvatochromie $\lambda_{max}$ dans le spectre UV et calcul de l'indice $E_T$ (énergie d'excitation molaire) de la substance solvatochrome, caractérisé en ce que d'après l'équation (1)

$$c_p = c^* \exp(E_T°/E_D - E_T°/E_D) - c^* \qquad (1)$$

on détermine la concentration du composant polaire, dans l'équation (1), $c_p$ désignant la concentration du composant polaire et le composant polaire étant défini comme le composant ayant l'indice $E_T30$ le plus grand, $E_T$ désignant l'énergie d'excitation molaire du composé solvatochrome, $E_T$ désignant l'indice $E_T$ du composant non polaire pur, $E_T30$ étant l'indice $E_T$ qui est déterminé en utilisant la pyridiniumphénolatebétaïne de formule suivante (I)

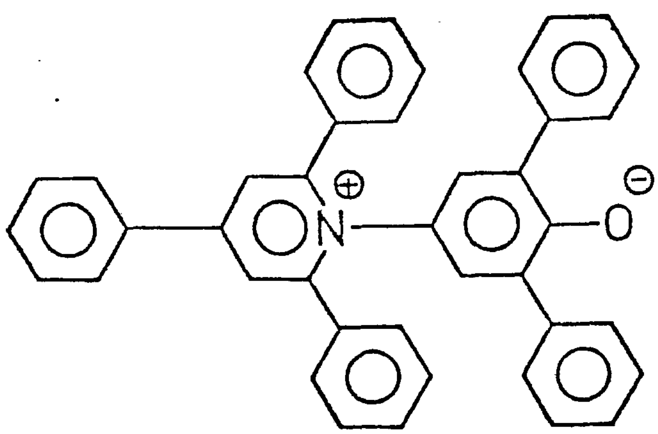

(I)

dans le solvant considéré, c* et $E_D$ étant des paramètres empiriques qui peuvent être trouvés dans des tableaux connus en eux-mêmes ou qui peuvent être déterminés de manière empirique en ce que l'on prépare des mélanges des deux composants en concentration connue, on ajoute aux solutions un composé solvatochrome, de préférence la pyridiniumphénolatebétaïne (I) ou le colorant de Kosower (II)

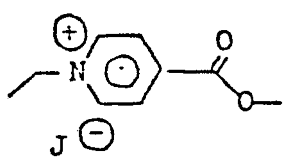

(II)

et on détermine les indices $E_T$ dans ces solutions, on convertit en concentrations les teneurs respectives des composants individuels dans les solutions et on reporte sur un graphique les indices $E_T$ obtenus, en fonction de ln $c_p$, on détermine la pente $E_D$ et la section en ordonnées b de la partie linéaire et on calcule c* d'après l'équation (3)

$$c^* = \exp[(E_T° - b)/E_D] \qquad (3),$$

dans l'équation précitée, c* et $E_D$ étant définis comme spécifié ci-dessus, $E_T{}^o$ désignant l'énergie d'excitation molaire du composant non polaire pur, b désignant la section en ordonnées de la partie linéaire des courbes obtenues et $E_D$ désignant la pente de la partie linéaire de la courbe obtenue.

2. Procédé selon la Revendication 1, caractérisé en ce que l'on calcule l'indice $E_T$ du composé solvatochrome d'après l'équation (2)

$$E_T = 28\,590 \text{ kcal} \cdot \text{nm} \cdot \text{moles}^{-1}/\lambda_{max} \quad (2)$$

$$(1 \text{ kcal} = 4{,}186\,8 \text{ kJ})$$

dans laquelle $E_T$ est défini comme spécifié ci-dessus.

3. Procédé selon l'une des Revendications 1 ou 2, caractérisé en ce que l'on choisit les concentrations de façon que $\lambda_{max}$ se trouve dans l'intervalle d'extinction de 0,6 à 1,0.

4. Procédé selon l'une des Revendications 1 à 3, caractérisé en ce que l'on effectue les mesures à une température constante.

Fig. 1

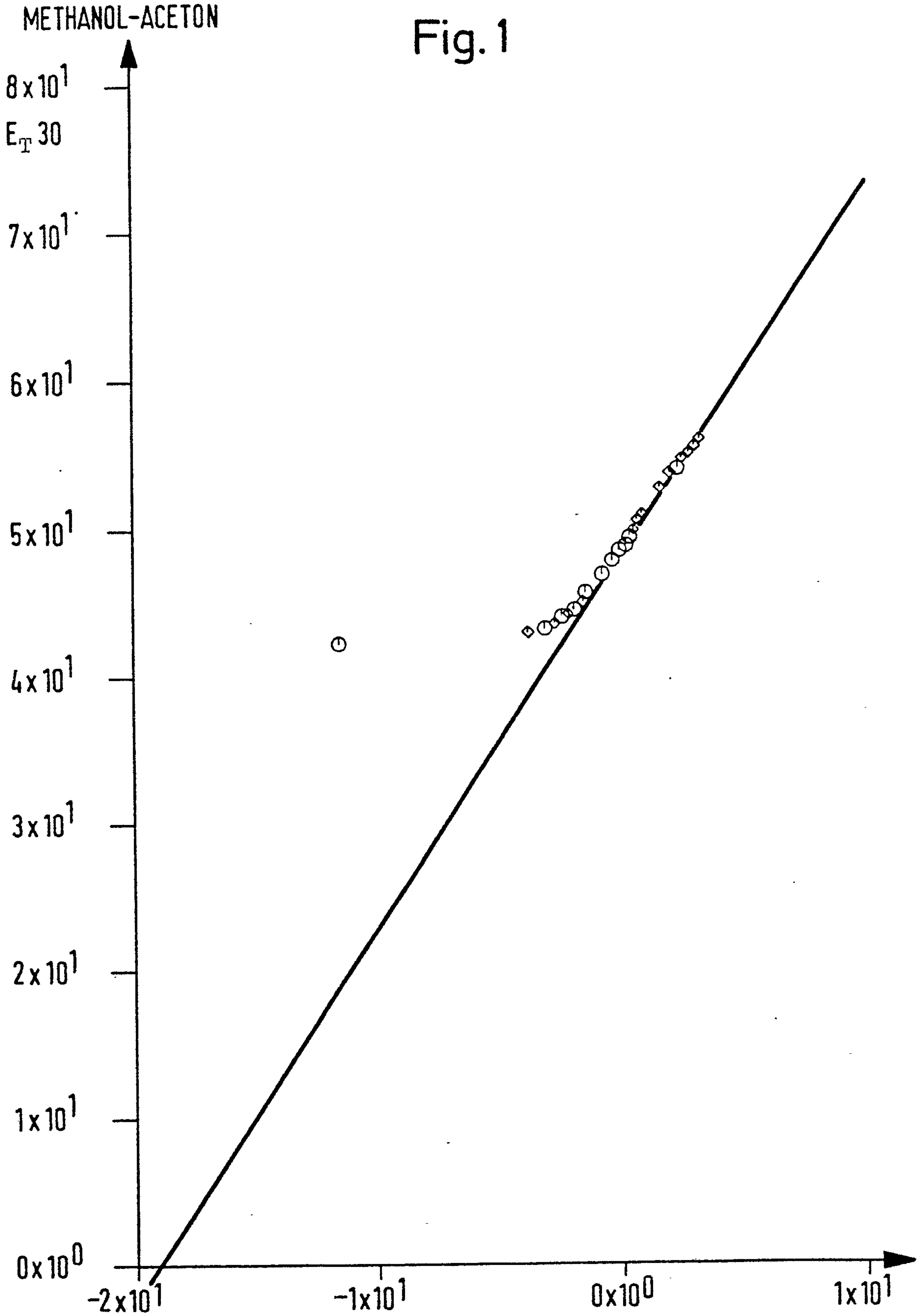


$E_T 30 = 2{,}526 \times \ln c_p + 48{,}1066$

Fig. 2

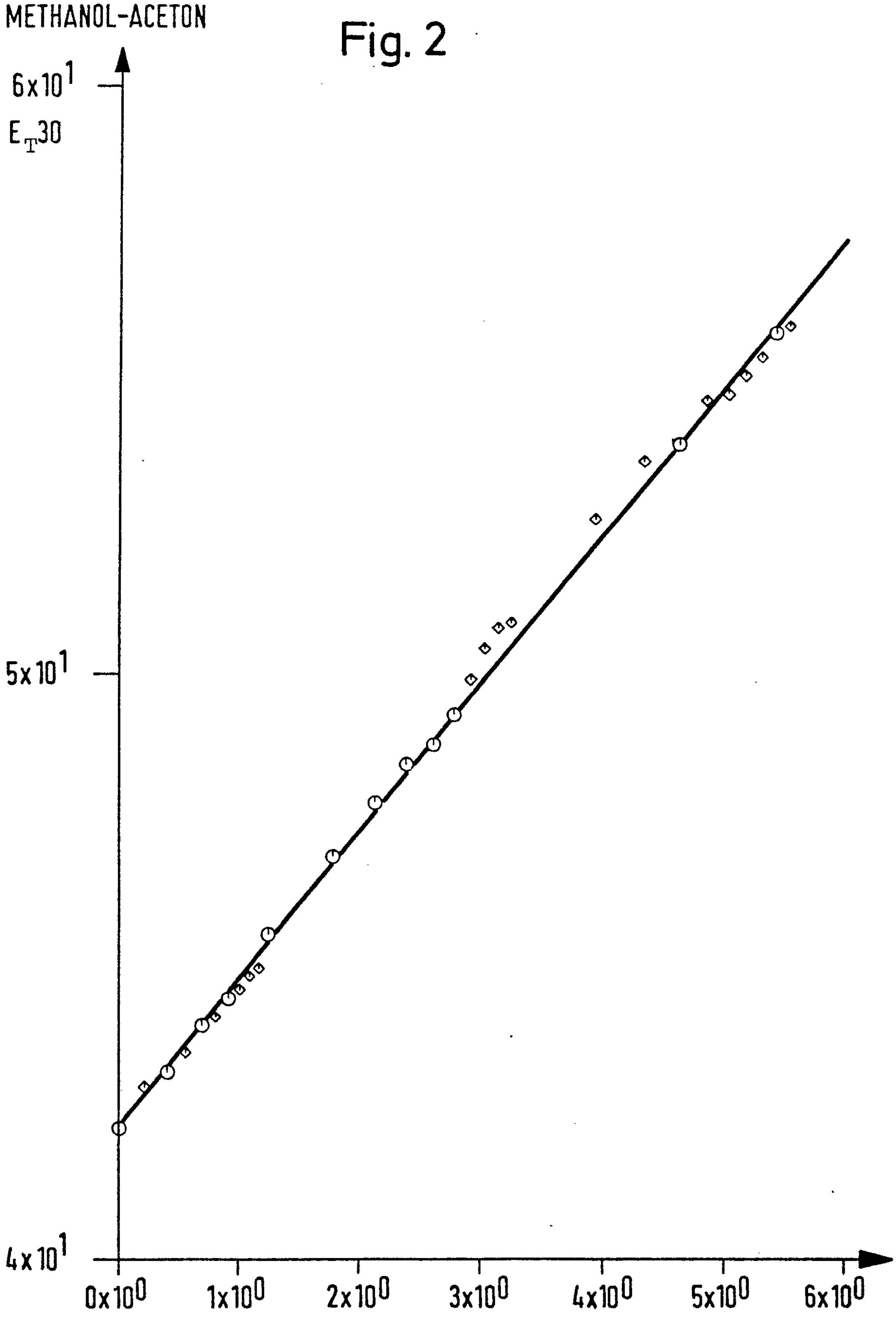


$E_T\ 30 = 2,526 \times \ln(c_p/c^* + 1) + 42,2656$ $\ln(c_p/c^* + 1)$

Fig. 3

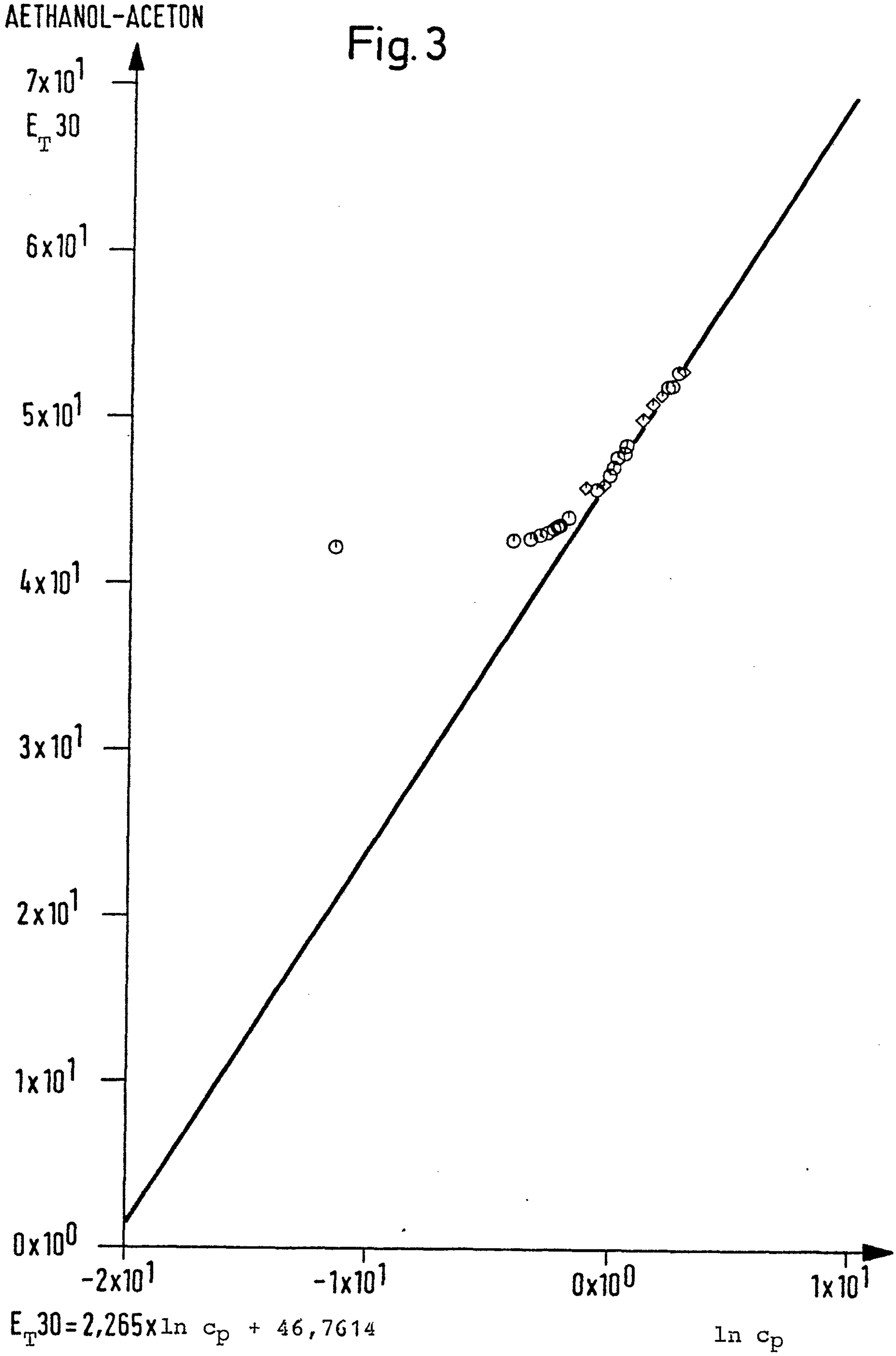


$E_T30 = 2,265 \times \ln c_p + 46,7614$

Fig. 4

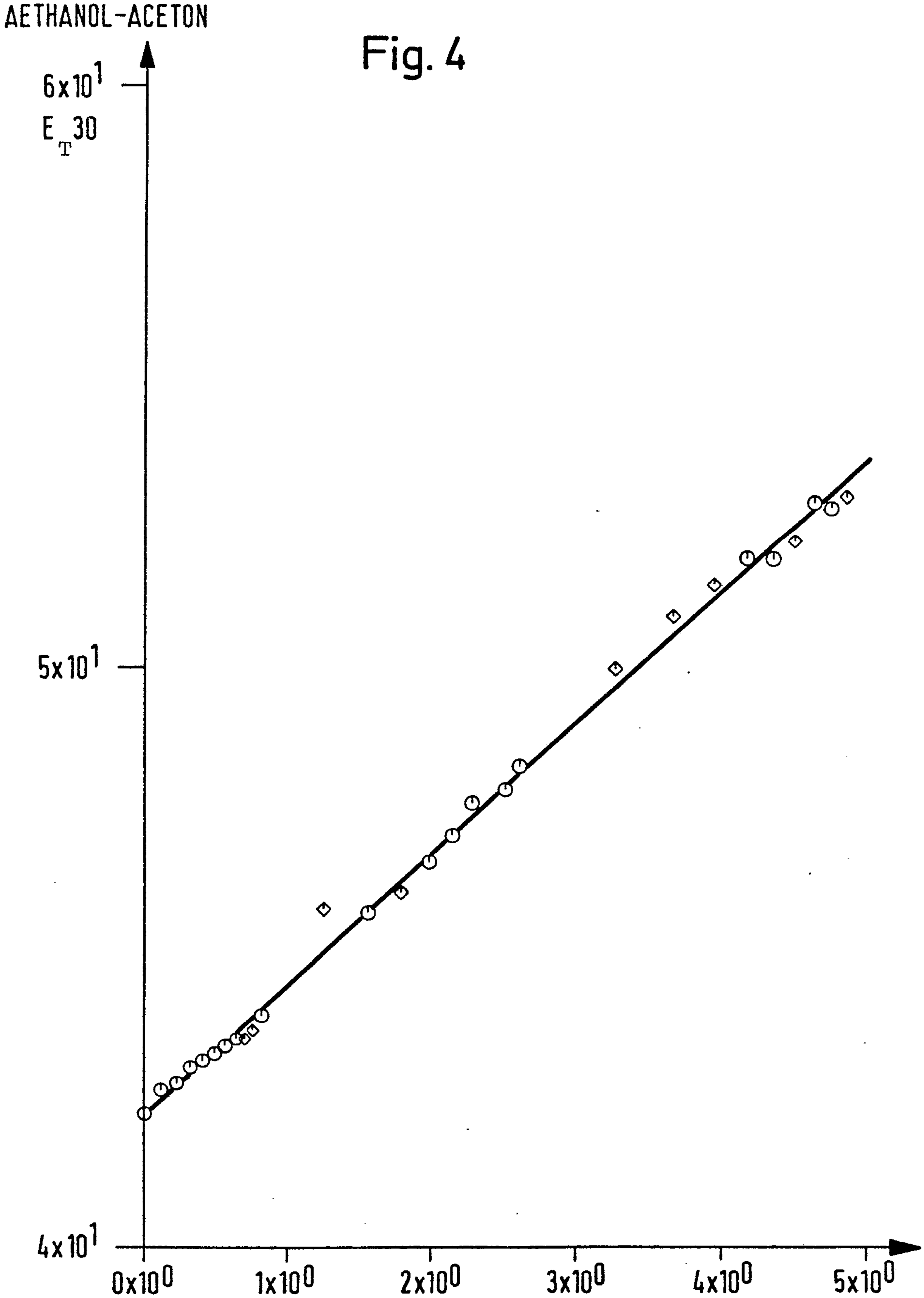


$E_T30 = 2,265 \times \ln(c_p/c^* + 1) + 42,2575$